# EUROPÄISCHE PATENTSCHRIFT

(11) **EP 3 619 076 B1**
(45) Veröffentlichungstag und Bekanntmachung des Hinweises auf die Patenterteilung: **21.06.2023**
(21) Anmeldenummer: 18711321.2
(22) Anmeldetag: 14.03.2018
(51) Int. Cl.: B60L 58/30, B60L 58/40, H01M 8/04089, H01M 8/04082, H01M 16/00

(54) **VERFAHREN UND SYSTEM ZUM BETRIEB EINES BRENNSTOFFZELLENSYSTEMS**
METHOD AND SYSTEM FOR OPERATING A FUEL CELL SYSTEM
PROCÉDÉ ET SYSTÈME DE FONCTIONNEMENT D'UN SYSTÈME DE PILES À COMBUSTIBLE

(30) Priorität: 04.05.2017 DE 102017207477
(43) Veröffentlichungstag der Anmeldung: 11.03.2020
(73) Patentinhaber: Robert Bosch GmbH, 70442 Stuttgart (DE)
(72) Erfinder: BRAUN, Jochen, 71296 Heimsheim (DE)
(86) Internationale Anmeldenummer: PCT/EP2018/056355
(87) Internationale Veröffentlichungsnummer: WO 2018/202348

(56) Entgegenhaltungen:
- EP-A2- 1 086 847
- DE-A1-102012 203 219
- DE-A1-102012 224 450
- DE-T5-112007 002 603
- DE-T5-112010 005 520

## Beschreibung

Die Erfindung betrifft ein Verfahren und ein System zum Betrieb eines Brennstoffzellensystems, welches in einem Fahrzeug angeordnet ist, wobei die Energie für einen Antriebsstrang des Fahrzeugs sowohl aus dem Brennstoffzellensystem als auch aus dem alternativen Energiespeicher bezogen werden kann.

Bei Fahrzeugen mit Antriebssystemen mit Brennstoffzellensystemen (auch als FCS bezeichnet, engl.: *fuel cell system*) wird beim Abstellen des Fahrzeugs eine Abschaltprozedur für das Brennstoffzellensystem durchgeführt.

Durch die DE 10 2007 002603 T5 ist ein Verfahren zum Betrieb eines Brennstoffzellensystems und mindestens eines Subsystems des Brennstoffzellensystems, welche in einem Fahrzeug angeordnet sind, bekannt. Die Energie für einen Antriebsstrang des Fahrzeugs kann sowohl aus dem Brennstoffzellensystem als auch aus einem alternativen Energiespeicher bezogen werden. Bei dem bekannten Verfahren wird eine Stoppzeit und ein Stopplatz erlernt, um die Benutzungstendenz des Benutzers zu erfassen. Wenn sich das Fahrzeug beispielsweise dem Büro oder dem Wohnort des Benutzers annähert können bereits Betriebsparameter des Brennstoffzellensystems zur Vorbereitung von dessen Abschaltung eingestellt werden, beispielsweise indem ein Trocknungsbetrieb eingestellt wird. Eine Erfassung der Anzahl und Dauer von Stoppphasen während des Betriebs des Fahrzeugs ist dabei nicht vorgesehen.

Durch die DE 10 2012 224450 A1 ist ein Hybrid-Elektrofahrzeug mit einem elektrischen Antrieb und einem Verbrennungsmotor bekannt. Abhängig von einer ermittelten mittleren Fahrzeuggeschwindigkeit wird die Ladestrategie einer Batterie des elektrischen Antriebs eingestellt. Ein Bezug zu einem Brennstoffzellensystem ist hierbei nicht vorhanden.

### Offenbarung der Erfindung

Bei einem erfindungsgemäßen Verfahren zum Betrieb eines Brennstoffzellensystems, welches in einem Fahrzeug angeordnet ist, wobei die Energie für einen Antriebsstrang des Fahrzeugs sowohl aus dem Brennstoffzellensystem als auch aus dem alternativen Energiespeicher bezogen werden kann, ist vorgesehen, dass in einem ersten Fahrzeugzustand oder in einem zweiten Fahrzeugzustand anhand zustandsspezifischer Lernfunktionen eine Ermittlung der Anzahl und Dauer von Abständen der Start- und/oder Stopp-Phasen des Fahrzeugs in einem definierten Zeitintervall durchgeführt wird. Anschließend erfolgt die Einstellung von Betriebsparametern des Brennstoffzellensystems und des mindestens einen Subsystems des Brennstoffzellensystems in Abhängigkeit der zuvor ermittelten Anzahl und Dauer des Abstell- und/oder Stopp-Phasen des Fahrzeugs und schließlich wahlweise eine Anpassung eines Ladezustands (SOC) des alternativen Energiespeichers. Durch die erfindungsgemäß vorgeschlagene Lösung besteht die Möglichkeit, die Betriebsweise des Fahrzeuges zu berücksichtigen sowohl was zurückliegende Fahrziele als auch in der Zukunft liegende Fahrziele betrifft. Dazu werden Lernfunktionen implementiert, die das Abschalten des Brennstoffzellensystems und das Abschalten des Subsystems Luftförderung verzögern, d.h. einen Nachlauf dieser Systeme ermöglichen. Eine zusätzliche Verzögerung des Nachlaufs des Subsystems Luftförderung durch eine weitere Aktivierung dieses Systems ohne Last, d.h. nahezu drucklos bei voll geöffneter Drucksteuerklappe, ist möglich, wobei der minimale Luftmassenstrom durch komplettes Öffnen einer Bypass-Klappe realisiert ist und der minimale Luftmassenstrom nicht durch den Brennstoffzellenstapel selbst sondern daran vorbei geführt wird. Optional können über Navigationssysteme besondere Eigenheiten der aktuellen Fahrtroute berücksichtigt werden, ferner die Umgebungstemperatur sowie weitere Betriebsparameter.

Das Fahrzeug weist eine hybride Energiequelle auf, was die Energie für den Elektroantrieb des Fahrzeugs betrifft. Die Energie für den Elektroantrieb kann sowohl aus dem Brennstoffzellensystem als auch aus dem alternativen Energiespeicher stammen. Der Elektroantrieb umfasst beispielsweise einen elektrischen Antriebsstrang (engl. *powertrain*) mit einer E-Maschine, einer Leistungselektronik und einem Getriebe. Das Fahrzeug ist bevorzugt ein Elektrofahrzeug (auch als EV bezeichnet, engl. *electric vehicle*) mit Brennstoffzellensystem. Alternativ dazu kann das Fahrzeug auch ein Hybridfahrzeug oder ein Plug-In-Hybridfahrzeug mit Brennstoffzellensystem sein. Zusätzlich zu einem Antrieb einer Achse kann noch ein weiterer Antrieb eingebaut sein z.B. ein 2-Achsantrieb für Allrad. Insbesondere kann beispielsweise je ein Elektroantrieb mit E-Maschine, Leistungselektronik und Getriebe an einer Achse vorgesehen sein. Es können beide Elektroantriebe mit dem Brennstoffzellensystem und dem alternativen Energiespeicher gekoppelt sein. Es kann auch weitere Kombinationen geben, sodass z.B. eine E-Maschine aus der Batterie gespeist wird und in die Batterie rekuperiert. Auch sind hier weitere Varianten möglich, wie beispielsweise Radnabenantrieb.

Der alternative Energiespeicher des Fahrzeugs kann beispielsweise eine Traktionsbatterie oder auch ein weiterer Energiespeicher mit einem Energiewandler sein. Unter dem Begriff "Batterie" wird in der vorliegenden Offenbarung wie im Sprachgebrauch üblich auch ein Akkumulatorsystem verstanden. Im Folgenden werden die Begriffe "Batterie" und "elektrischer Energiespeicher" zur Vereinfachung weitgehend synonym verwendet. Bevorzugt umfasst der alternative Energiespeicher eine Traktionsbatterie oder einen Superkondensator (auch als Supercap oder SC bezeichnet, engl.: *supercapacitor*). Der alternative Energiespeicher kann dabei auch zur Rückgewinnung von Bremsenergie im Fahrzeug verwendet werden.

Das Brennstoffzellensystem umfasst einen Energiespeicher, z. B. einen H₂-Tank, mit einem elektrochemischen Energiewandler. Auch der elektrochemische Energiewandler alleine (ohne H₂-Tank) kann als Brennstoffzellensystem bezeichnet sein. Das Brennstoffzellensystem umfasst typischerweise galvanische Zellen, welche die chemische Reaktionsenergie eines zugeführten Brennstoffs und eines Oxidationsmittels in elektrische Energie umwandeln. Das Brennstoffzellensystem kann beispielsweise ein Wasserstoff-Sauerstoff-Brennstoffzellensystem sein, aber auch auf Ethanol, Methanol oder weiteren Kohlenwasserstoffen basieren. Insbesondere kann das Brennstoffzellensystem PEMFC-Membran-Technologie (Proton Exchange Membran) oder Festoxidbrennstoffzellen (SOFC, Englisch: *solid oxide fuel cell*) umfassen.

Das erfindungsgemäße Verfahren kann beispielsweise bei Brennstoffzellensystemen eingesetzt werden, bei welchen die Abschaltprozedur ein Trocknen eines Kathodenpfads des Brennstoffzellensystems umfasst. Dabei wird der Kathodenpfad, insbesondere mit dem Stack, durch eine Luftfördereinheit trockengeblasen, um das Einfrieren von verbleibendem Wasser oder Wasserdampf im Kathodenpfad und in der Sensorik zu vermeiden.

Die Abschaltprozedur des Brennstoffzellensystems umfasst beispielsweise die folgenden Schritte, wobei nachfolgend aufgezählte Subsysteme abgeschaltet werden, wobei die Art und Weise sowie die zeitliche Abfolge abhängig von der jeweiligen Topologie des Brennstoffzellensystems ist:
- Luftsystem: nach optionalem Entfeuchten/Trocknen des Kathodenpfades mittels einer Luftfördereinheit: Stoppen der Luftversorgung, wobei der Sauerstoff danach in verbleibendem Volumen innerhalb weniger Minuten und Sekunden abreagiert
- Abschalten der H₂-Versorgung (z.B. Ventile), Pumpen der H₂-Versorgungseinheit, so dass der Anodenpfad dann ebenfalls abgesperrt ist,
- Kühlsystem abschalten, abhängig von der Temperatur, wobei dies an die Luft- und H₂-Steuerung angekoppelt sein kann, aber nicht notwendiger Weise sein muss,
- elektrisches System abschalten.

Insbesondere kann das Verfahren bei hoch automatisierten bzw. vollautomatisierten Fahrzeugen, z. B. beim autonomen Fahren eingesetzt werden. Die entsprechenden Überwachungsfunktionen werden laufend aktiv mit ausreichend Genauigkeit und Zuverlässigkeit durchgeführt. Das Verfahren wird dabei durch Software-Parameter flexibel an das jeweilige System- und Komponentendesign angepasst. Insbesondere die Größe der Batterie bzw. auch der Hybridisierungsgrad wird bei der Einstellung/Applikation des Verfahrens berücksichtigt bzw. automatisch vom Verfahren an die Komponenten (z.B. Batteriegröße) angepasst. Die Überwachung erfolgt bevorzugt in für Fahrzeugsteuergeräte typischen Zeitrastern. Eine hohe Abtastrate ist hierbei nicht notwendigerweise erforderlich, so dass keine signifikanten Auswirkungen auf die Rechenleistung bestehen bzw. so dass keine besonderen Anforderungen an das entsprechende Steuergerät gestellt werden müssen.

Erfindungsgemäß wird außerdem ein System zum Betrieb eines Brennstoffzellensystems, welches in einem Fahrzeug angeordnet und mit einem alternativen Energiespeicher verbunden ist, vorgeschlagen, wobei die Energie für den Antriebsstrang des Fahrzeugs aus dem Brennstoffzellensystem und aus dem alternativen Energiespeicher gleichzeitig oder nur aus einer der Quellen bezogen werden kann. Das System ist zur Durchführung eines der zuvor beschriebenen Verfahren ausgebildet bzw. eingerichtet, so dass die Merkmale, die mit Bezug zum Verfahren beschrieben worden sind, entsprechend für das System als offenbart gelten sollen und umgekehrt.

Bevorzugt ist das System mit einem Navigationssystem verbunden, über welches ein bestimmtes Fahrziel und die Restwegstrecke zu dem Fahrziel bekannt sind.

Die Module können als computerimplementierte Vorrichtungen ausgeführt sein und umfassen bevorzugt Software-Komponenten. Der nötige Computercode kann auf beliebigen Datenträgern zur Verfügung gestellt sein und wesentlich zur Implementierung des Verfahrens beitragen.

Erfindungsgemäß wird auch ein Computerprogramm vorgeschlagen, gemäß dem eines der hierin beschriebenen Verfahren durchgeführt wird, wenn das Computerprogramm auf einer programmierbaren Computereinrichtung ausgeführt wird. Das Computerprogramm umfasst Befehle, die bewirken, dass eines der zuvor beschriebenen Systeme oder Subsysteme die entsprechenden Schritte eines der zuvor beschriebenen Verfahren ausführt. Bei dem Computerprogramm kann es sich beispielsweise um Module zur Implementierung eines Steuerungssystems für ein Brennstoffzellensystem und/oder eines Batteriemanagementsystems eines Fahrzeugs handeln. Die Erfindung umfasst auch ein computerlesbares Medium, auf dem das Computerprogramm gespeichert ist. Das Computerprogramm kann beispielsweise auf einem permanenten oder wiederbeschreibbaren Speichermedium, auf einer CD-ROM, DVD, Blu-ray Disc oder einem USB-Stick gespeichert sein. Zusätzlich oder alternativ dazu kann das Computerprogramm auf einer Computereinrichtung wie etwa auf einem Server oder einem Cloud-Computing-System zum Herunterladen bereitgestellt werden, z.B. über ein Datennetzwerk wie das Internet, oder eine Kommunikationsverbindung wie etwa eine Telefonleitung oder eine drahtlose Verbindung.

Erfindungsgemäß wird außerdem ein Fahrzeug vorgeschlagen, das ein Brennstoffzellensystem und einen alternativen Energiespeicher aufweist, wobei die Energie für den Antrieb des Fahrzeugs aus dem Brennstoffzellensystem und aus dem alternativen Energiespeicher gleichzeitig oder nur aus einer der beiden Quellen bezogen wird. Das Fahrzeug weist optional außerdem ein Navigationssystem auf oder ist mit diesem verbunden, so dass ein bestimmtes Fahrziel und die Restwegstrecke zu dem Fahrziel bekannt sind. Nach einer bevorzugten Ausführungsform umfasst der alternative Energiespeicher eine oder mehrere Traktionsbatterien und/oder Superkondensatoren.

### Vorteile der Erfindung

Durch die erfindungsgemäß vorgeschlagene Lösung kann die Anzahl der Start-Stopp-Vorgänge für ein Fahrzeug mit einem Brennstoffzellensystem und dessen Subsysteme deutlich verringert werden. Die sich daraus ergebenden Vorteile liegen unter anderem darin, dass das Lastprofil, welches an die Aktoren innerhalb eines Brennstoffzellensystems gestellt wird, und speziell auch die Aktoren im Subsystem Luftförderung minimiert werden kann. Dadurch wiederum lassen sich ein Verschleiß und eine Alterung der eingesetzten Bauteile sowie Wartungsintervalle verbessern. Es stellt sich eine Herabsetzung der Ausfallwahrscheinlichkeit der Komponenten ein, wodurch ein robusterer Betrieb des Brennstoffzellensystems und von dessen Subsystem Luftförderung erzielt werden kann. Bei der Auslegung der Aktoren, die innerhalb dieser Systeme verbaut sind, können Absenkungen der Lastprofile eingesetzt werden, so dass die Komponenten preiswerter ausgelegt werden können.

Insbesondere das Subsystem Luftförderung ist bei der erfindungsgemäß vorgeschlagenen Lösung durch die Minimierung der Start- und Stopp-Vorgänge mechanisch deutlich entlastet. Das Subsystem Luftförderung weist aufgrund der aufgetretenen hohen Drehzahl Gaslager auf, an die nun bei Implementierung des erfindungsgemäß vorgeschlagenen Verfahrens deutlich reduzierte

Anforderungen gestellt werden können. Bei diesen Systemen stellen Start-Stopp-Vorgänge sehr kritische Betriebspunkte dar, da das aerostatische Druckpolster bei Gaslagern unterhalb einer Grenzdrehzahl nicht mehr ausreichend ist, um eine Welle kontaktlos zu zentrieren, so dass es zu Materialreibungen kommen kann, welche den Verschleiß signifikant beeinflussen. Bei der erfindungsgemäß vorgeschlagenen Lösung kann durch die Minimierung auftretender Start-Stopp-Vorgänge dieser kritische Verschleiß besonders günstig beeinflusst werden, bzw. den Einsatz von Gaslagern überhaupt erst ermöglichen. Auch bei anderen Lagertypen ist eine Reduzierung der Start-Stopp-Vorgänge von Vorteil.

Aufgrund einer reduzierten Ansteuerung der im Brennstoffzellensystem und im Subsystem Luftförderung verbauten Aktoren kann eine reduzierte Schallemission erreicht werden oder auch eine Vergleichmäßigung der Schallemissionen und dadurch eine weniger störende Wahrnehmung. Des Weiteren sind weniger Systemaktionen zur Vor- und Nachbereitung einer Fahrzyklus erforderlich, wodurch sich eine drastische Verringerung eines Fehlerpotentials durch weniger ausgeführte Funktionen ergibt.

Das erfindungsgemäß vorgeschlagene Verfahren kann autark vom Fahrzeug gesteuert werden und benötigt keinerlei Anbindung an beispielsweise eine Car-to-Car-Infrastruktur oder eine Cloud-Verbindung oder dergleichen. Durch eine Vernetzung, insbesondere mit einem Navigationssystem, kann das erfindungsgemäß vorgeschlagene Verfahren zur Minimierung von Start-Stopp-Vorgängen optimiert werden. Die für die Steuerung notwendigen Daten können in Steuergeräten des Fahrzeugs, d.h. unmittelbar im Fahrzeug, oder auch bei vernetzten Systemen außerhalb des Fahrzeugs gespeichert/bearbeitet werden, man denke nur an Cloud-Anbindungen.

Durch die erfindungsgemäß vorgeschlagene Lösung ist durch die Reduzierung der Anforderungen, d.h. die Reduzierung der Anzahl der Start-Stopp-Vorgänge der Einsatz von Gaslagern überhaupt erst möglich, da eine zu hohe Anzahl angeforderter Start-Stopp-Vorgänge für einen hochdrehenden Verdichter bzw. eine hochdrehende Strömungsmaschine KO-Kriterium für die Realisierung darstellen kann. Die erfindungsgemäße Lösung ermöglicht darüber hinaus auch eine Vergleichmäßigung der Schallemissionen und dadurch eine weniger störende Wahrnehmung.

### Kurze Beschreibung der Erfindung

Anhand der Figuren werden im Folgenden das erfindungsgemäße Verfahren und System näher beschrieben.
- Figur 1: zeigt eine beispielhafte Darstellung eines Fahrzeugs mit einem erfindungsgemäßen System und
- Figur 2: zeigt eine schematische Darstellung eines Verfahrens gemäß einer Ausführungsform der Erfindung.

### Ausführungsvarianten

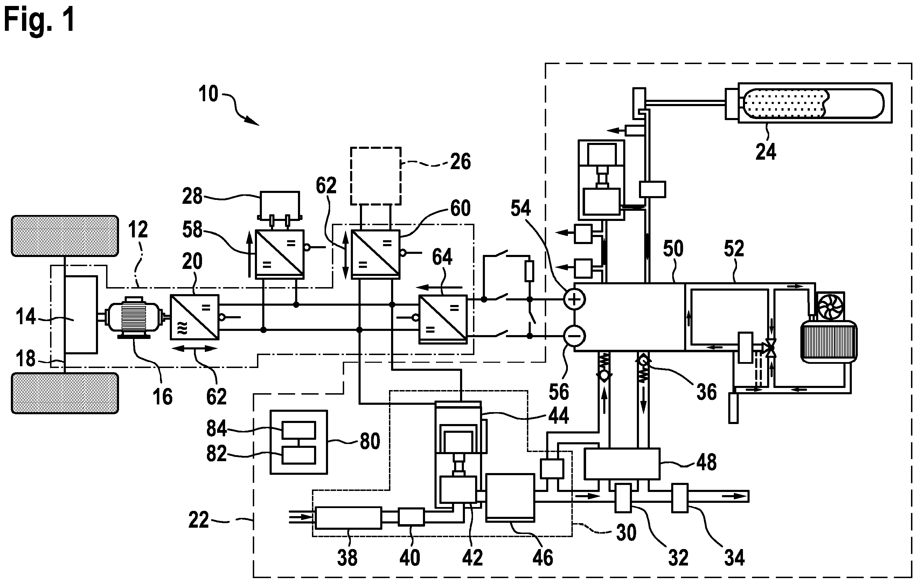

In der Darstellung gemäß Figur 1 ist nur eine mögliche Topologie eines Brennstoffzellensystems 22 mit mindestens einem alternativen Energiespeicher 26 als Beispiel zur Erläuterung des Verfahrens dargestellt. Es wird hier explizit darauf hingewiesen, dass neben der in Figur 1 dargestellten Fahrzeugtopologie viele andere Ausführungsmöglichkeiten eines Brennstoffzellensystems 22 mit mindestens einem alternativen Energiespeicher 26 verwirklicht werden können.

Figur 1 zeigt ein Fahrzeug 10, das mit einem Brennstoffzellensystem 22 und mindestens einem alternativen Energiespeicher 26 ausgestattet ist. Das Brennstoffzellensystem 22 und der alternative Energiespeicher 26 können jeweils die volle Energie oder einen Teil der Energie für einen Antriebsstrang 12 des Fahrzeugs 10 bereitstellen. Der alternative Energiespeicher 26 kann darüber hinaus typischerweise auch Energie zurück rekuperieren. Zusätzlich zu dem Antriebsstrang 12 einer Achse 18 können noch weitere Antriebsstränge 12 für weitere Achsen des Fahrzeugs 10 verbaut sein, was nicht dargestellt ist.

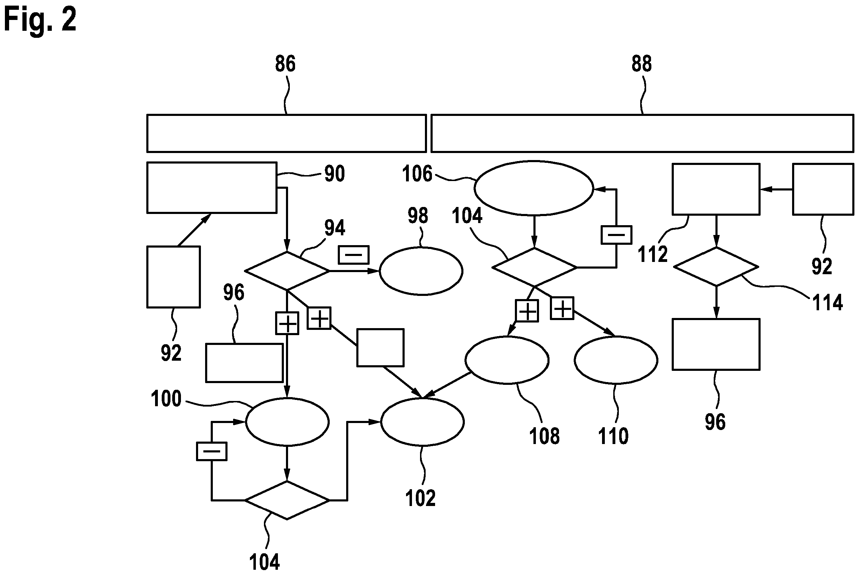

Das Brennstoffzellensystem 22 ist mit einem Steuergerät 80 verbunden, wobei dieses mit bekannten Überwachungs- und Diagnosefunktionen ausgestattet ist und insbesondere auch dazu eingerichtet ist, das Brennstoffzellensystem 22 zum Antriebsstrang 12 des Fahrzeugs 10 zu- oder wegzuschalten, wobei das Steuergerät 80 auch die Abschaltprozedur des Brennstoffzellensystems 22 auslösen und durchführen kann. Im Steuergerät 80 sind ein erstes Modul 82 zur Durchführung einer ersten Lernfunktion 90 und ein weiteres, zweites Modul 84 zur Durchführung einer zweiten Lernfunktion 112 implementiert (vgl. Figur 2).

Der mindestens eine alternative Energiespeicher 26, z. B. eine Traktionsbatterie oder ein Superkondensator, ist mit einem weiteren Steuergerät verbunden, wobei dieses mit bekannten Überwachungs- und Diagnosefunktionen belegt ist und außerdem dazu eingerichtet ist, den alternativen Energiespeicher 26 zum Antriebsstrang 12 des Fahrzeugs 10 zu- oder wegzuschalten. Das weitere Steuergerät kann auch als Batteriemanagementsystem ausgestaltet und bezeichnet werden. Es ist prinzipiell auch denkbar, dass weitere Steuergerät einzusparen und auch die Steuerung, die Überwachung sowie die Diagnosefunktion für den mindestens einen alternativen Energiespeicher 26 im Steuergerät 80 unterzubringen.

Figur 1 ist zu entnehmen, dass der Antriebsstrang 12 des Fahrzeugs 10 ein Getriebe 14 mit mindestens einer E-Maschine 16 umfasst. Die E-Maschine 16 stellt den Antrieb für die angetriebene Achse 18 dar. Der mindestens einen E-Maschine 16 ist ein Inverter 20 zugeordnet; durch Position 62 soll eine Bidirektionalität angedeutet werden, d.h. die mindestens eine E-Maschine 16 arbeitet sowohl im Generator- als auch im Motormodus. Die Komponenten des Antriebsstrangs 12 des Fahrzeugs 10 ist in Figur 1 durch eine strichpunktierte Linie gekennzeichnet.

Das Fahrzeug 10 umfasst darüber hinaus das Brennstoffzellensystem 22. Dieses umfasst mindestens einen Energiespeicher 24, der als H₂-Tank ausgebildet ist. Das Brennstoffzellensystem 22 umfasst darüber hinaus ein Subsystem 30 Luftförderung. In diesem befindet sich ein Luftfilter 38 und ein diesem nachgeschalteter Massenstromsensor 40. Das Subsystem 30 Luftförderung umfasst darüber hinaus einen Verdichter 42, der durch einen als Elektroantrieb ausgebildeten Verdichterantrieb 44 angetrieben ist. Darüber hinaus ist im Subsystem 30 Luftförderung ein Zwischenkühler 46 angeordnet, mit welchem nach dem Verdichter 42 die erwärmte Luft wieder abgekühlt wird, bevor sie nach Passage des Zwischenkühlers 46 des Brennstoffzellensystems 22 einen Brennstoffzellenstapel 50 zuströmt. Der Brennstoffzellenstapel 50 ist seinerseits durch einen Kühlkreislauf 52 temperiert, dessen Komponenten in der Darstellung gemäß Figur 1 nur schematisch angedeutet sind. Ausgangsseitig umfasst der Brennstoffzellenstapel 50 einen Pluspol 54 sowie einen Minuspol 56.

Der Inverter 20 des Antriebsstrangs 12 ist elektrisch mit einem Brennstoffzellenkonverter 64 verbunden.

Aus der Darstellung gemäß Figur 1 geht des Weiteren hervor, dass das Fahrzeug 10 mindestens einen alternativen Energiespeicher 26 umfasst. Der alternative Energiespeicher 26 kann als mindestens eine Hochvoltbatterie oder als eine Anordnung von Superkondensatoren ausgeführt sein. Wie aus der Darstellung gemäß Figur 1 hervorgeht, ist der alternative Energiespeicher 26 über einen High-Voltage-Konverter 60 sowohl mit dem Antriebsstrang 12 als auch mit dem Subsystem 30 Luftförderung elektrisch verbunden. Der High-Voltage-Konverter 60 ist bidirektional betreibbar, angedeutet durch Bezugszeichen 62.

Darüber hinaus umfasst das Fahrzeug 10 eine konventionelle 12-Volt-Fahrzeugbatterie 28, die über einen Low-Voltage-Konverter 58 mit dem Antriebsstrang 12 des Fahrzeugs 10 verbunden ist.

Hervorzuheben ist, dass das Brennstoffzellensystem 22 in der dargestellten Ausführungsvariante über eine Bypass-Klappe 32 verfügt, über welche die vom Subsystem 30 Luftförderung gelieferte Luft am Brennstoffzellenstapel 50 vorbeigeführt werden kann. Darüber hinaus befindet sich im Brennstoffzellensystem 22 abströmseitig eine Drucksteuerklappe 34. Eingangsseitig ist der Brennstoffzellenstapel 50 mit einem Absperrventil 36 verbunden. Da das in Figur 1 in der dort dargestellten Topologie ausgebildete Brennstoffzellensystem 22 über eine Bypass-Klappe 32 verfügt, steht eine weitere Möglichkeit zur Steuerung und Regelung desselben zur Verfügung. Dies stellt jedoch nur eine Ausführungsmöglichkeit dar; das erfindungsgemäß vorgeschlagene Verfahren ist auch bei einem Brennstoffzellensystem 22, welches ohne Bypass-Klappe 32 ausgeführt ist, anwendbar.

Während in der Darstellung gemäß Figur 1 die Komponenten des Fahrzeugs 10, insbesondere die Komponenten des Antriebsstrangs 12, diejenige des Brennstoffzellensystems 22 sowie die des Subsystems 30 Luftförderung, ferner alternative Energiespeicher 26 und dergleichen mehr dargestellt sind, wird anhand der Darstellung des Flussdiagramms in Figur 2 das erfindungsgemäß vorgeschlagene Verfahren zur Reduzierung der Start-Stopp-Vorgänge im mobilen Brennstoffzellensystem 22 sowie des mindestens einen Subsystems 30 Luftförderung anhand eines Fahrzeugzustandes "aus", vgl. Position 86, sowie anhand eines Fahrzeugzustandes "an", vgl. Position 88, näher beschrieben.

Wie aus dem Flussdiagramm gemäß Figur 2 hervorgeht, erfolgt die Berücksichtigung der Betriebsweise des Fahrzeugs 10 für zurückliegende Fahrten und gegebenenfalls auch im Ausblick auf weitere Fahrtziele durch eine erste Lernfunktion 90. Die erste Lernfunktion 90 im ersten Modul 82 verzögert im Ergebnis das Abschalten des Brennstoffzellensystems 22 und das Abschalten des Subsystems 30 Luftförderung. Die erste Lernfunktion 90 ermittelt die Betriebsweise des Fahrzeugs 10 vor allem hinsichtlich der Abstell-/Pausenzeiten zwischen den einzelnen Fahrten, so lange bis ein Wiederstart des Fahrzeugs 10 erfolgt. Die erste Lernfunktion 90 bedient sich dabei interner Timer in den Steuergeräten 80 oder auch eines vernetzten Datenaustausches 92, über den Daten von außerhalb des Fahrzeugs 10, beispielsweise über ein Navigationssystem oder über eine Cloud, an die erste Lernfunktion 90 übertragen werden können und in die Ermittlung der Betriebsweise des Fahrzeugs 10 einfließen. Die entsprechenden Daten können lokal in EEPROM's oder bei vernetzten Fahrzeugen außerhalb, beispielsweise in einer Cloud, gespeichert sein. Die erste Lernfunktion 90 ermittelt, ob das Fahrzeug 10 sehr häufig kurz anhält, beispielsweise im Minutenbereich, und dann wieder losfährt, was eine typische Betriebsweise für Lieferfahrzeuge, Taxibetrieb und dergleichen mehr ist. Im Folgenden wird diese Betriebsart, die durch häufige, kurze Stopps gekennzeichnet ist, durch die Betriebsart "Liefermodus" 94 bezeichnet. Die erste Lernfunktion 90 kann die Betriebsweise des Fahrzeugs 10 sowohl in kürzeren Zeitrahmen, beispielsweise in Stunden oder Tagen, sowie auch über längere Zeiträume, beispielsweise Wochen und Monaten, auswerten.

Die innerhalb der ersten Lernfunktion 90 ermittelten Daten werden dann genutzt, um entsprechende Aktionen im Brennstoffzellensystem 22 beziehungsweise im Subsystem 30 Luftförderung bzw. bei zusätzlichen Verbrauchern zu adaptieren und insbesondere den Ladezustand (SOC) mindestens eines alternativen Energiespeichers 26 anzupassen. Nimmt das Fahrzeug 10 entsprechend der Darstellung in Figur 2 einen Fahrzeugzustand "an" 88 (Leerlauf) ein, so kommt eine weitere, zweite Lernfunktion 112 im zweiten Modul 84 zur Anwendung. Die weitere, zweite Lernfunktion 112 ermittelt die Betriebsweise des Fahrzeugs 10 während eines aktuellen Fahrzyklus. Die Auswertung innerhalb der weiteren, zweiten Lernfunktion 112 kann sowohl die Auswertung eines Fahrzyklus als auch mehrerer Fahrzyklen einschließen. Es werden auftretende Start-Stopp-Phasen des Fahrzeugs 10 ermittelt, wobei das Fahrzeug 10 jedoch nicht abgestellt wird. Daraus ergeben sich Informationen, inwieweit das Fahrzeug 10 beispielsweise im Stadtverkehr mit häufigen Start-Stopp-Phasen unterwegs ist oder ob dies beim Betrieb des Fahrzeugs 10 eher seltener auftritt.

Auch die im Rahmen der weiteren, zweiten Lernfunktion 112 ermittelten Daten werden dann genutzt, um Aktionen im Brennstoffzellensystem 22 im Subsystem 30 Luftförderung und gegebenenfalls auch hinsichtlich des alternativen Energiespeichers 26 einzuleiten.

Ausgehend vom Fahrzeugzustand "aus", vgl. Position 86, in welchen das Fahrzeug 10 abgestellt ist, wird die erste Lernfunktion 90 aktiv, um gegebenenfalls unter Hinzuziehung eines vernetzten Datenaustausches 92 externe Daten hinsichtlich der Ermittlung der Betriebsweise des Fahrzeugs 10 zu berücksichtigen. Ergibt sich aus der Ermittlung, dass kein "Liefermodus" 94 vorliegt, so erfolgt der Aufruf, einer Standard-Abstellroutine 98 für das Brennstoffzellensystem 22 des Fahrzeugs 10.

Wird hingegen im Rahmen der Ermittlung der Betriebsweise des Fahrzeugs 10 bei der ersten Lernfunktion 90 das Vorliegen des "Liefermodus" 94 erkannt, so bestehen mehrere Optionen:
Als erste Aktion kann das Abstellen des Brennstoffzellensystems 22 verzögert erfolgen; dies läuft nach dem Abstellen des Fahrzeugs 10 für eine gewisse Zeitspanne im Nachlauf weiter. Das Brennstoffzellensystem 22, wie auch das Subsystem 30 Luftförderung können im Leerlauf weiter betrieben werden und erzeugen dabei eine elektrische Leerlaufleistung. Aus der Nachlaufverlängerung 100 des Brennstoffzellensystems 22 kann zu einer Ladezustandsabfrage 104 verzweigt werden, innerhalb der der Ladezustand (SOC) des mindestens einen alternativen Energiespeichers 26 abgefragt wird. Solange das Maximum des SOCs nicht erreicht ist, kann die elektrische Leerlaufleistung, die während des Nachlaufs des Brennstoffzellensystems 22 erzeugt wird, in den alternativen Energiespeicher 26 eingespeist werden, bis dieser voll bzw. nahezu voll ist. Erst danach kann möglicherweise eine Einschaltung von Zusatzverbrauchern 110 erfolgen oder, falls die im Leerlauf des Brennstoffzellensystems 22 erzeugte elektrische Leerlaufleistung nicht abgenommen werden kann, es erfolgt eine Bleed-Down-Aktion 108, innerhalb der das Subsystem 30 Luftförderung abgeschaltet wird und verbleibender Sauerstoff auf der Kathodenseite des Brennstoffzellenstapel 50 verbraucht wird.

Wird im Rahmen der ersten Lernfunktion 90 hinsichtlich der Betriebsweise des Fahrzeugzustandes des Fahrzeugs 10 das Vorliegen der Betriebsweise "Liefermodus" 94 erkannt, so kann eine zweite Aktion eingeleitet werden, wonach eine Nachlaufverlängerung 102 des Subsystems 30 Luftförderung initiiert wird. Das Subsystem 30 Luftförderung wird hier bei minimaler Leistung mit minimaler Drehzahl weiter betrieben. Die minimale Drehzahl liegt bevorzugt knapp über der Grenzdrehzahl für die eingesetzten Gaslager. Die Grenzdrehzahl der eingesetzten Gaslager wird durch die Ausbildung des aerostatischen Druckpolsters in diesen bestimmt, unterhalb der eine Welle nicht mehr kontaktlos zentriert werden kann, d.h. Festkörperkontakt auftritt, der jedoch unbedingt zu vermeiden ist. Beim Nachlauf des Subsystems 30 Luftförderung wird sowohl die in Figur 1 dargestellte Drucksteuerklappe 34 komplett geöffnet, so dass eine Luftförderung bei sehr kleinem Druck und minimaler Last gegeben ist; ferner wird die Bypass-Klappe 32, vgl. Darstellung Figur 1, komplett geöffnet, um den Luftmassenstrom komplett am Brennstoffzellenstapel 50 vorbei zu führen. Das Subsystem 30 Luftförderung kann so mit minimaler Verlustleistung, die beispielsweise aus dem alternativen Energiespeicher 26 entnommen werden kann, für einige Zeit, insbesondere im Minutenbereich liegend, weiterbetrieben werden, wodurch ebenfalls der Nachlauf verlängert wird. Bei minimaler Last, d.h. im Nachlauf vorliegenden Leerlauf, sind auch die Geräuschemissionen der Komponenten des Brennstoffzellensystems 22 bzw. der Komponenten des Subsystems 30 Luftförderung minimiert.

In diesem Zusammenhang wird darauf hingewiesen, dass es wesentlich ist, das der Öffnungsdruck des Absperrventils 36, welches einströmseitig vor dem Brennstoffzellenstapel 50 angeordnet ist, so ausgelegt wird, dass der Öffnungsdruck etwas über dem minimalen Druck liegt, der durch die minimale Luftverdichtung des Subsystems 30 Luftförderung erzeugt wird. Es ist in jedem Fall sicherzustellen, dass in diesem Betriebszustand keine Luft mehr in den Brennstoffzellenstapel 50 gelangt.

Für Systeme ohne Bypass im Luftpfad um den Brennstoffzellenstapel 50 muss die Luftströmung im Leerlaufbetrieb durch den Brennstoffzellenstapel 50 hindurchgeführt werden. Dies ist zwar nicht optimal jedoch innerhalb bestimmter Grenzen hinsichtlich Wassermanagements, Wiederstarts und weiteren Bedingungen zu berücksichtigen. Das Vorhandensein eines Bypasses ist zur Implementierung des erfindungsgemäß vorgeschlagenen Verfahrens zur Reduzierung der Start-Stopp-Vorgänge von Vorteil aber jedoch nicht zwingende Voraussetzung für die vorgeschlagenen Lernverfahren.

Ausgehend vom Fahrzeugzustand "an", vgl. Position 88 (Leerlauf), wird in der weiteren, zweiten Lernfunktion 112 die Betriebsweise des Fahrzeugs 10 während mindestens eines Fahrzyklus oder auch mehrerer Fahrzyklen ermittelt hinsichtlich auftretender Start-Stopp-Phasen, wobei jedoch das Fahrzeug 10 nicht abgestellt wird. Im Rahmen der weiteren, zweiten Lernfunktion 112 wird eine Stopp-Phasenermittlung 114 durchgeführt. Analog zur ersten Lernfunktion 90 kann die weitere zweite Lernfunktion 112 auch über einen vernetzten Datenaustausch 92 Daten aus einem Navigationssystem oder beispielsweise einer Cloud bei der Ermittlung der Betriebsweise des Fahrzeugs 10 während der Fahrt berücksichtigen. Stellt sich heraus, dass im Rahmen einer Stopp-Phasenermittlung 114 häufig Stopp-Phasen auftreten, so können beispielsweise eine Anpassung des Bereiches für den Ladezustand SOC des mindestens einen alternativen Energiespeichers 26 durchgeführt werden. Der Ladezustandsbereich für den mindestens einen alternativen Energiespeicher 26 kann im Fahrbereich etwas abgesenkt werden, damit für eine temporäre Abstellphase der Betrieb, d.h. der Nachlauf des Brennstoffzellensystems 22, verlängert werden kann.

Treten im Fahrzeugzustand 88 häufigere Stopp-Phasen auf, so läuft das Brennstoffzellensystem 22 bei Auftreten eine Stopp-Phase zunächst weiter auf niedrigster Last bzw. Leerlauf. Die im Rahmen des Leerlaufes des Brennstoffzellensystems 22 erzeugte elektrische Leerlaufleistung kann, sofern möglich, in den mindestens einen alternativen Energiespeicher 26 eingespeist werden, solange dessen Ladezustand (SOC) noch nicht sein Maximum erreicht hat. Ist hingegen das Maximum des Ladezustandes SOC des mindestens einen alternativen Energiespeichers 26 erreicht, so kann entweder eine Bleed-Down-Aktion 108, d.h. ein Abschalten der Luftversorgung des Brennstoffzellensystems 22, erfolgen und verbleibender Sauerstoff in der Kathode abreagieren. Alternativ besteht auch die Möglichkeit, hier zur Einschaltung von Zusatzverbrauchern 110 überzugehen, um die beim Nachlauf 106 des Brennstoffzellensystems 22 bei einer Stopp-Phase des Fahrzeugs 10 erzeugte elektrische Leerlaufleistung abzunehmen.

Während der Nachlauf 106 des Subsystems 30 Luftförderung wie obenstehend beschrieben eine zweite Handlungsoption darstellt, liegt eine dritte Handlungsoption darin, eine Einschaltung von Zusatzverbrauchern 110 vorzunehmen. Dies bietet sich beispielsweise dann an, wenn im Rahmen der Handlungsoption 1 der Ladezustand SOC des alternativen Energiespeichers 26 sein Maximum erreicht hat, dieser voll bzw. nahezu vollständig geladen ist. Dann besteht die Möglichkeit, eine Einschaltung von Zusatzverbrauchern 110 vorzunehmen, sofern diese in nutzbringender Weise eingesetzt werden können. Beispielsweise könnte im Rahmen des Einschaltens möglicher Zusatzverbraucher 110 ein Laden der konventionellen 12-Volt-Fahrzeugbatterie 28 vorgenommen werden, ferner könnten Aktoransteuerungen für Plausibilisierungs- und Testfunktionen durchgeführt werden. Mit dieser dritten Aktion, Einschaltung von Zusatzverbrauchern 110, lässt sich die Nachlaufphase des Brennstoffzellensystems 22 nochmals verlängern.

Die weitere Handlungsoption ist der Leerlaufbetrieb des Luftsystems über den Bypass oder durch den Brennstoffzellenstapel 50, falls ebenjener Bypass nicht vorhanden sein sollte bei einer Topologie des Brennstoffzellensystems 22 ohne Bypass.

Im Rahmen des vernetzten Datenaustausches 92 können in die beiden vorstehend beschriebenen Lernfunktionen 90 bzw. 112 Navigationsdaten eines Navigationssystems bzw. Navigationsdaten vernetzter Fahrzeuge (Car-to-Car, Car-to-Infrastruktur) entsprechend detailliert und weiter optimiert werden. Beispielsweise können bestimmte Start-Stopp-Phasen bereits in der Vorausschau mit in die Betriebsstrategie zur Reduzierung der Start-Stopp-Vorgänge miteinbezogen werden, so zum Beispiel sich abzeichnenden Stau-Situationen. Ebenso kann das gesetzte Fahrziel, was im Rahmen der Navigationsdaten eines Navigationssystems vorliegt, berücksichtigt werden. Bei Zielerreichung kann das Brennstoffzellensystem 22 bzw. das Subsystem 30 Luftförderung vollständig abgestellt werden. Ist das Fahrtziel hingegen noch nicht erreicht, kann die Nachlaufphase des Brennstoffzellensystems 22 und/oder des Subsystems 30 Luftförderung etwas verlängert werden. Bei der Ermittlung der Betriebsstrategie für das Fahrzeug 10 mit einem mobilen Brennstoffzellensystem 22 und mindestens einem alternativen Energiespeicher 26 können beispielsweise weitere Eingangsparameter, wie die Umgebungstemperatur, Luftfeuchtigkeit und dergleichen mehr, Berücksichtigung finden. Ferner sei noch erwähnt, dass für den Fall, dass das Fahrzeug 10 im "Liefermodus" 94 betrieben wird, bei niedrigen Außentemperaturen ein Teil der im Leerlauf des Brennstoffzellensystems 22 bzw. des Subsystems 30 Luftförderung erzeugten Leerlaufleistung zum Heizen des Fahrgastraumes im Rahmen einer Comfort-Funktion genutzt werden könnte.

Die Funktionen können alternativ auch außerhalb des Fahrzeugs 10 auf einem Server durchgeführt werden und über entsprechende Schnittstellen Car-to-Infrastruktur nur die Aktoransteuerung sowie die Sensorwerte ausgetauscht werden.

Die Erfindung ist nicht auf die hier beschriebenen Ausführungsbeispiele beschränkt und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Betrieb eines Brennstoffzellensystems (22) und mindestens eines Subsystems (30) Luftförderung des Brennstoffzellensystems (22), welche in einem Fahrzeug (10) angeordnet sind, wobei die Energie für einen Antriebsstrang (12) des Fahrzeugs (10) sowohl aus dem Brennstoffzellensystem (22) als auch aus einem alternativen Energiespeicher (26) bezogen werden kann, mit den nachfolgenden Verfahrensschritten:
a) Ermitteln der Anzahl und Dauer von Abstell- und/oder Stoppphasen des Fahrzeugs (10) in einem definierten Zeitintervall in einem ersten Fahrzeugzustand (86) "aus" oder in einem zweiten Fahrzeugzustand (88) "an" anhand fahrzeugzustandsspezifischer Lernfunktionen (90, 112), wobei in der dem ersten Fahrzeugzustand (86) "aus" zugeordneten ersten Lernfunktion (90) die Betriebsweise des Fahrzeugs (10) hinsichtlich den Abstell- und/oder Stoppphasen des Fahrzeugs (10) zwischen einzelnen Fahrten bis zum Wiederstart durchgeführt wird, wozu interne Timer an Steuergeräten (80), ein vernetzter Datenaustausch (92), eine Datenspeicherung auf einem lokalen EEPROM sowie eine Auswertung der Betriebsweise in Stunden und/oder Tagen und/oder längeren Zeiträumen durchgeführt werden, wobei in einer dem zweiten Fahrzeugzustand (88) "an" zugeordneten zweiten Lernfunktion (112) die Betriebsweise des Fahrzeugs (10) während mindestens eines Fahrzyklus bei nicht abgestelltem Fahrzeug (10) hinsichtlich auftretender Start-Stopp-Phasen ermittelt wird,
b) wobei überprüft wird, ob die ermittelte Anzahl der Abstellphasen in einem definierten Zeitintervall einen ersten Schwellenwert übertrifft und eine durchschnittliche Dauer der Abstellphasen einen zweiten Schwellenwert unterschreitet und abhängig davon Betriebsparameter des Brennstoffzellensystems (22) und des mindestens einen Subsystems (30) Luftförderung des Brennstoffzellensystems (22) in einem ersten oder zweiten Betriebszustand des Brennstoffzellensystems (22) eingestellt werden, und dass für den Fall, dass die ermittelte Anzahl der Stopp-Phasen in dem definierten Zeitintervall einen dritten Schwellenwert übertrifft und eine durchschnittliche Dauer der Stopp-Phasen einen vierten Schwellenwert unterschreitet, ein zweiter oder dritter Betriebszustand des Brennstoffzellensystems (22) eingestellt wird.

2. Verfahren gemäß Anspruch 1, **dadurch gekennzeichnet, dass** zusätzlich zu den Verfahrensschritten a) und b) eine Anpassung (96) eines Ladezustandsbereiches (SOC ≙State of Charge) des alternativen Energiespeichers (26) vorgenommen wird.

3. Verfahren gemäß Anspruch 2, **dadurch gekennzeichnet, dass** die Anpassung des Ladezustandsbereiches des alternativen Energiespeichers (26) eine Anpassung einer min-max-Grenze umfasst und/oder eine Anpassung einer Steuerung/Regelung des Ladezustands umfasst.

4. Verfahren gemäß einem der vorhergehenden Ansprüche, **dadurch gekennzeichnet, dass** die erste Lernfunktion (90) und/oder die zweite Lernfunktion (112) eine aktuelle Fahrtroute des Fahrzeugs (10) berücksichtigen.

5. Verfahren gemäß einem der vorhergehenden Ansprüche, **dadurch gekennzeichnet, dass** die erste Lernfunktion (90) und/oder die zweite Lernfunktion (112) die Umgebungstemperatur und weitere Betriebsparameter, so zum Beispiel aktuelle Verbraucher im Bordnetz, Feuchte der Umgebungsluft, Alterung der Batterie, Alterung Brennstoffzellenstapel (50), Zustand der Fahrzeugklimatisierung, berücksichtigen.

6. Verfahren nach Anspruch 1, **dadurch gekennzeichnet, dass** der erste Betriebszustand des Brennstoffzellensystems (22) eine verzögerte Abschaltung des Brennstoffzellensystems (22) umfasst, innerhalb dessen das Brennstoffzellensystem (22) im Leerlauf betrieben wird und entstehende Energie in den alternativen Energiespeicher (26) gespeichert und/oder zusätzlichen Verbrauchern (110) übermittelt wird.

7. Verfahren nach Anspruch 1, **dadurch gekennzeichnet, dass** der zweite Betriebszustand des Brennstoffzellensystems (22) einen Betrieb des Subsystems (30) Luftförderung des Brennstoffzellensystems (22) bei minimaler Last und minimaler Drehzahl umfasst.

8. Verfahren nach Anspruch 7, **dadurch gekennzeichnet, dass** der zweite Betriebszustand des Brennstoffzellensystems (22) ein Vorbeileiten eines Luftmassenstroms mittels einer geöffneten Bypass-Klappe (32) am Brennstoffzellenstapel (50) des Brennstoffzellensystems (22) umfasst.

9. Computerprogramm zur Durchführung in einem System nach Ansprüchen 10 oder 11 eines der Verfahren nach einem der Ansprüche 1 bis 8, wenn das Computerprogramm auf einer programmierbaren Computereinrichtung ausgeführt wird.

10. System zum Betrieb eines Brennstoffzellensystems (22), welches in einem Fahrzeug (10) angeordnet ist, wobei die Energie für den Antriebsstrang (12) des Fahrzeugs (10) aus dem Brennstoffzellensystem (22) oder aus einem alternativen Energiespeicher (26) bezogen werden kann, **dadurch gekennzeichnet, dass** dieses ein erstes Modul (82) zur Durchführung einer ersten Lernfunktion (90) aufweist und ein zweites Modul (84) zur Durchführung einer zweiten Lernfunktion (112) aufweist, und dass dieses weiterhin eingerichtet ist zur Durchführung des Verfahrens nach einem der Ansprüche 1 bis 8,
wobei das Brennstoffzellensystem (22) mindestens ein Subsystem (30) Luftförderung umfasst, bei welchem in einem zweiten Betriebszustand eine Drucksteuerklappe (34) für Luftförderung bei sehr kleinem Druck unter minimaler Last und eine Bypass-Klappe (32) komplett geöffnet sind, um den bei mit minimaler Last betriebenen Subsystem (30) Luftförderung auftretenden Luftmassenstrom am Brennstoffzellenstapel (50) vorbeizuleiten, wobei vor dem Brennstoffzellenstapel (50) ein Absperrventil (36) angeordnet ist, dessen Öffnungsdruck etwas über dem minimalen Druck liegt, der durch die minimale Luftverdichtung durch das Subsystem (30) Luftförderung erzeugt wird.

11. System nach Anspruch 10 verbunden mit einem Navigationssystem, über welches ein bestimmtes Fahrziel und die Restwegstrecke zu dem Fahrziel bekannt ist.

12. Fahrzeug (10) mit einem System nach einem der Ansprüche 10 oder 11, wobei der alternative Energiespeicher (26) eine oder mehrere Hochvoltbatterien und/oder Superkondensatoren umfasst.

## Claims

1. Method for operating a fuel cell system (22) and at least one air conveyance subsystem (30) of the fuel cell system (22), which are arranged in a vehicle (10), wherein the energy for a drive train (12) of the vehicle (10) can be drawn both from the fuel cell system (22) and from an alternative energy store (26), comprising the following method steps:
a) determining the number and duration of switching-off and/or stopping phases of the vehicle (10) in a defined time interval in a first vehicle state (86) "off" or in a second vehicle state (88) "on" on the basis of vehicle-state-specific learning functions (90, 112), wherein in the first learning function (90), assigned to the first vehicle state (86) "off", the operating mode of the vehicle (10) is carried out with regard to the switching-off and/or stopping phases of the vehicle (10) between individual journeys up until restarting, for which internal timers on control devices (80), a networked data exchange (92), a data storage on a local EEPROM as well as an evaluation of the operating mode in hours and/or days and/or longer time periods are carried out, wherein in a second learning function (112), assigned to the second vehicle state (88) "on", the operating mode of the vehicle (10) is determined during at least one driving cycle in the case of a vehicle (10) that is not switched off with regard to starting/stopping phases occurring,
b) wherein it is checked whether the determined number of switching-off phases in a defined time interval is above a first threshold value and an average duration of the switching-off phases is below a second threshold value and, dependent on that, operating parameters of the fuel cell system (22) and of the at least one air conveyance subsystem (30) of the fuel cell system (22) in a first or second operating state of the fuel cell system (22) are set, and in that, in the case where the determined number of stopping phases in the defined time interval is above a third threshold value and an average duration of the stopping phases is below a fourth threshold value, a second or third operating state of the fuel cell system (22) is set.

2. Method according to Claim 1, **characterized in that**, in addition to method steps a) and b), an adaptation (96) of a state-of-charge range (SOC) of the alternative energy store (26) is performed.

3. Method according to Claim 2, **characterized in that** the adaptation of the state-of-charge range of the alternative energy store (26) comprises an adaptation of a min-max limit and/or an adaptation of an open-loop/closed-loop control of the state of charge.

4. Method according to one of the preceding claims, **characterized in that** the first learning function (90) and/or the second learning function (112) take into account a currently applicable driving route of the vehicle (10).

5. Method according to one of the preceding claims, **characterized in that** the first learning function (90) and/or the second learning function (112) take into account the ambient temperature and further operating parameters, such as for example the currently applicable consumer devices within the on-board network, the humidity of the ambient air, the ageing of the battery, the ageing of the fuel cell stack (50) and the state of the vehicle airconditioning .

6. Method according to Claim 1, **characterized in that** the first operating state of the fuel cell system (22) comprises a delayed switch-off of the fuel cell system (22), within which the fuel cell system (22) is operated in idling mode and resulting energy is stored in the alternative energy store (26) and/or transferred to additional consumer devices (110).

7. Method according to Claim 1, **characterized in that** the second operating mode of the fuel cell system (22) comprises operating the air conveyance subsystem (30) of the fuel cell system (22) at a minimum load and a minimum rotational speed.

8. Method according to Claim 7, **characterized in that** the second operating mode of the fuel cell system (22) comprises conducting an air-mass flow past the fuel cell stack (50) of the fuel cell system (22) by means of an open bypass valve (32).

9. Computer program for carrying out one of the methods according to Claims 1 to 8 in a system according to Claim 10 or 11 when the computer program is run on a programmable computer device.

10. System for operating a fuel cell system (22), which is arranged in a vehicle (10), wherein the energy for the drive train (12) of the vehicle (10) can be drawn from the fuel cell system (22) or from an alternative energy store (26), **characterized in that** it comprises a first module (82) for carrying out a first learning function (90) and a second module (84) for carrying out a second learning function (112), and **in that** it is also set up for carrying out the method according to one of Claims 1 to 8,
wherein the fuel cell system (22) comprises at least one air conveyance subsystem (30), in which in a second operating state a pressure control valve (34) for air conveyance at very low pressure under minimal load and a bypass valve (32) are completely open, in order to conduct the air-mass flow occurring when the air conveyance subsystem (30) is operated at minimal load past the fuel cell stack (50), wherein arranged upstream of the fuel cell stack (50) is a shut-off valve (36), the opening pressure of which lies slightly above the minimum pressure which is generated by the minimum air compression provided by the air conveyance subsystem (30).

11. System according to Claim 10 connected to a navigation system, via which a specific destination and the remaining distance to the destination are known.

12. Vehicle (10) with a system according to either of Claims 10 and 11, wherein the alternative energy store (26) comprises one or more high-voltage batteries and/or supercapacitors.

## Revendications

1. Procédé pour faire fonctionner un système de piles à combustible (22) et au moins un sous-système (30) de transport d'air du système de piles à combustible (22), lequel est disposé dans un véhicule (10), l'énergie pour un groupe motopropulseur (12) du véhicule (10) pouvant être soutirée à la fois du système de piles à combustible (22) et d'un accumulateur d'énergie (26) alternatif, comprenant les étapes de procédé suivantes :
a) identification du nombre et de la durée de phases de stationnement et/ou d'arrêt du véhicule (10) dans un intervalle de temps défini dans un premier état de véhicule (86) « éteint » ou dans un deuxième état de véhicule (88) « allumé » à l'aide de fonctions d'apprentissage (90, 112) spécifiques à l'état du véhicule, dans la première fonction d'apprentissage (90) associée au premier état de véhicule (86) « éteint », le mode de fonctionnement du véhicule (10) en ce qui concerne les phases de stationnement et/ou d'arrêt du véhicule (10) étant effectué entre les trajets individuels jusqu'au redémarrage, ce pourquoi des temporisations internes sur des contrôleurs (80), un échange de données (92) en réseau, une mémorisation des données sur une EEPROM locale ainsi qu'une interprétation des modes de fonctionnement en heures et/ou en jours et/ou en périodes plus longues sont réalisés, dans une deuxième fonction d'apprentissage (112) associée au deuxième état de véhicule (88) « allumé », le mode de fonctionnement du véhicule (10) étant identifié pendant au moins un cycle de déplacement avec le véhicule (10) non stationné en ce qui concerne les phases arrêt-démarrage qui surviennent,
b) un contrôle étant effectué afin de vérifier si le nombre identifié de phases de stationnement dans un intervalle de temps défini dépasse une première valeur de seuil et une durée moyenne des phases de stationnement est inférieure à une deuxième valeur de seuil et, en fonction de cela, des paramètres de fonctionnement du système de piles à combustible (22) et de l'au moins un sous-système (30) de transport d'air du système de piles à combustible (22) étant réglés dans un premier ou un deuxième état de fonctionnement du système de piles à combustible (22), et où dans le cas où le nombre identifié de phases arrêt-démarrage dans l'intervalle de temps défini dépasse une troisième valeur de seuil et une durée moyenne des phases arrêt-démarrage est inférieure à une quatrième valeur de seuil, un deuxième ou un troisième état de fonctionnement du système de piles à combustible (22) étant réglé.

2. Procédé selon la revendication 1, **caractérisé en ce qu'**en plus des étapes a) et b), une adaptation (96) d'une plage d'état de charge (SOC = State of Charge) de l'accumulateur d'énergie (26) alternatif est effectuée.

3. Procédé selon la revendication 2, **caractérisé en ce que** l'adaptation de la plage d'état de charge de l'accumulateur d'énergie (26) alternatif comprend une adaptation d'une limite mini-maxi et/ou une adaptation d'une commande/régulation de l'état de charge.

4. Procédé selon l'une des revendications précédentes, **caractérisé en ce que** la première fonction d'apprentissage (90) et/ou la deuxième fonction d'apprentissage (112) tiennent compte d'un itinéraire de déplacement actuel du véhicule (10).

5. Procédé selon l'une des revendications précédentes, **caractérisé en ce que** la première fonction d'apprentissage (90) et/ou la deuxième fonction d'apprentissage (112) tiennent compte de la température ambiante et d'autres paramètres de fonctionnement, par exemple des consommateurs actuels dans le réseau de bord, du taux d'humidité de l'atmosphère, du vieillissement de la batterie, du vieillissement de l'empilement de piles à combustible (50), de l'état de la climatisation du véhicule.

6. Procédé selon la revendication 1, **caractérisé en ce que** le premier état de fonctionnement du système de piles à combustible (22) comprend une mise hors circuit retardée du système de piles à combustible (22), au sein de laquelle le système de piles à combustible (22) fonctionne à vide et l'énergie produite est accumulée dans l'accumulateur d'énergie (26) alternatif et/ou communiquée à des consommateurs (110) supplémentaires.

7. Procédé selon la revendication 1, **caractérisé en ce que** le deuxième état de fonctionnement du système de piles à combustible (22) comprend un fonctionnement du sous-système (30) de transport d'air du système de piles à combustible (22) avec une charge minimale et une vitesse de rotation minimale.

8. Procédé selon la revendication 7, **caractérisé en ce que** le deuxième état de fonctionnement du système de piles à combustible (22) comprend un guidage d'un débit massique d'air au moyen d'un clapet de contournement (32) ouvert au niveau de l'empilement de piles à combustible (50) du système de piles à combustible (22).

9. Programme informatique destiné à mettre en œuvre dans un système selon les revendications 10 ou 11 l'un des procédés selon l'une des revendications 1 à 8 lorsque le programme informatique est exécuté sur un dispositif informatique programmable.

10. Système pour faire fonctionner un système de piles à combustible (22), lequel est disposé dans un véhicule (10), l'énergie pour le groupe motopropulseur (12) du véhicule (10) pouvant être soutirée du système de piles à combustible (22) ou d'un accumulateur d'énergie (26) alternatif, **caractérisé en ce que** celui-ci possède un premier module (82) destiné à effectuer une première fonction d'apprentissage (90) et un deuxième module (84) destiné à effectuer une deuxième fonction d'apprentissage (112), et **en ce que** celui-ci est en outre conçu pour mettre en œuvre le procédé selon l'une des revendications 1 à 8,
le système de piles à combustible (22) comprenant au moins un sous-système (30) de transport d'air avec lequel, dans un deuxième état de fonctionnement, un clapet de commande de pression (34) pour le transport d'air à une très faible pression sous une charge minimale et un clapet de contournement (32) sont complètement ouverts afin de guider le débit massique d'air qui se produit avec le sous-système (30) de transport d'air fonctionnant à la charge minimale au niveau de l'empilement de piles à combustible (50), une vanne d'arrêt (36) étant disposée avant l'empilement de piles à combustible (50), dont la pression d'ouverture est légèrement supérieure à la pression minimale qui est générée par la compression d'air minimale par le sous-système (30) de transport d'air.

11. Système selon la revendication 10, connecté à un système de navigation par le biais duquel une destination de trajet déterminée et le parcours restant jusqu'à la destination de trajet sont connus.

12. Véhicule (10) comprenant un système selon l'une des revendications 10 ou 11, l'accumulateur d'énergie (26) alternatif comprenant une ou plusieurs batteries à haute tension et/ou un ou plusieurs supercondensateurs.
